# EUROPÄISCHE PATENTSCHRIFT

(11) **EP 0 838 376 B1**
(45) Veröffentlichungstag und Bekanntmachung des Hinweises auf die Patenterteilung: **17.01.2001**
(21) Anmeldenummer: 97118455.1
(22) Anmeldetag: 23.10.1997
(51) Int. Cl.: B60R 21/13, B60N 2/42, B60N 2/22

(54) **In einem Kraftfahrzeug angeordneter Sitz**
Seat in a motor vehicle
Siège dans un véhicule automobile

(30) Priorität: 25.10.1996 DE 19644377
(43) Veröffentlichungstag der Anmeldung: 29.04.1998
(73) Patentinhaber: Bayerische Motoren Werke Aktiengesellschaft, 80788 München (DE)
(72) Erfinder: Schuster, Gerd, Dr., 85764 Oberschleissheim (DE); Premm, Günther, 85591 Vaterstetten (DE)

(56) Entgegenhaltungen:
- DE-A- 2 545 840
- DE-A- 3 813 557

## Beschreibung

Die Erfindung bezieht sich auf einen in einem Kraftfahrzeug angeordneten Sitz nach dem Oberbegriff des Patentanspruches 1.

Ein bekannter derartiger Sitz (DE-A-25 45 840) weist eine Rahmenkonstruktion für die Lehne des Sitzes auf, die über die Kopfhöhe des Sitzbenutzers reicht, mit ihrem oberen Bereich als Kopfstütze dient und bei einem Überschlag des Fahrzeugs als Überrollbügel wirkt. Nachteilig dabei ist es, daß die hohen, bei einem Überschlag auf den Rahmen einwirkenden Kräfte von der Lehne aufgenommen werden müssen. Alle Mechanikteile für die Sitzverstellung und die Verstellung der Lehnenneigung müssen diesen Kräften ebenfalls standhalten. Ein eventuelles zu weites Verlagern der Lehne eines Vordersitzes bei einem viersitzigen Cabrio nach hinten, kann hinten sitzende Fahrzeuginsassen gefährden.

Es ist auch bekannt (DE-A-39 03 450 bzw. DE-A-39 30 171), einen verstellbaren Überrollbügel in eine an der Rückenlehne festgelegte Kopfstütze zu integrieren. Dabei treten ebenfalls die schon geschilderten Probleme auf. Darüber hinaus muß auch die Fixierung des verlagerbaren Überrollbügels in der Rückenlehne den bei einem Überschlag auftretenden Belastungen standhalten.

Schließlich ist es bekannt (DE-A-38 13 557), die neigungsverstellbare Rückenlehne eines Fahrzeugsitzes unterhalb des oberen Anlenkpunktes des Sicherheitsgurtsystems über ein Halteglied mit dem hochgezogenen Mitteltunnel des Fahrzeugs zu verbinden. Als Halteglied kann ein von einem blockierbaren Seilroller abrollbares Seil oder auch eine Teleskopstange verwendet werden. Ein Hauptaugenmerk ist dabei auf die Festlegung des Seiles bzw. der Teleskopstange mit ihrem der Lehne abgewandten Ende an einer so hoch wie möglich liegenden Stelle der Bodenstruktur, nämlich am relativ hochgezogenen Mitteltunnel, gelegt. Über das im wesentlichen waagrecht an der Rückenlehne angreifende Halteglied soll erreicht werden, daß die Rückenlehne durch die bei einem Aufprall auftretenden Kräfte nur wie ein reiner Biegeträger beansprucht wird. Überlegungen dahingehend, insbesondere vertikale auf die Rückenlehne einwirkende Kräfte gut in das Fahrzeug weiterzuleiten sind nicht angestellt.

Der Erfindung liegt die Aufgabe zugrunde, einen in einem Kraftfahrzeug angeordneten Sitz nach dem Oberbegriff des Patentanspruches 1 zu schaffen, der bei geringem Bauraumbedarf für den Überrollbügel einerseits das übliche Verstellen des Sitzes ermöglicht, andererseits aber doch eine günstige Kraftübertragung in die Karosseriestruktur im Falle eines Überschlags ermöglicht.

Diese Aufgabe wird durch einen Sitz mit den im Patentanspruch 1 angegebenen Merkmalen gelöst.

Weitere vorteilhafte Einzelheiten der Erfindung sind Gegenstand von Unteransprüchen.

Das Stützelement ermöglicht im Falle eines Überschlags eine breitbasige Abstützung des Stützrahmens am Bodenblech oder an der Trägerstruktur des Fahrzeugs. Die übliche und gewohnte Verstellung sowohl des Sitzes als auch der Rückenlehne kann beibehalten werden. Die Arretierung der Stützstrebe kann entweder sensorgesteuert nach Erkennung eines Crashs oder eines Überschlags erfolgen. Es ist aber auch möglich, das Stützelement im Normalfall arretiert zu belassen und nur bei einer Sitzverstellung zu lösen.

Weitere vorteilhafte Einzelheiten, die auch Gegenstand von Unteransprüchen sind, sind im folgenden anhand mehrerer in der Zeichnung dargestellter Ausführungsbeispiele näher erläutert. Es zeigt
- Fig. 1: eine Prinzipdarstellung eines Fahrzeugsitzes mit zwei unterschiedlichen Positionen der Rückenlehne;
- Fig. 2: einen Schnitt durch ein Stützelement in einem ersten Ausführungsbeispiel;
- Fig. 3: einen Schnitt nach der Linie III-III in Fig. 2;
- Fig. 4 und Fig. 5: der Fig. 2 entsprechende Darstellungen weiterer Ausführungsbeispiele.

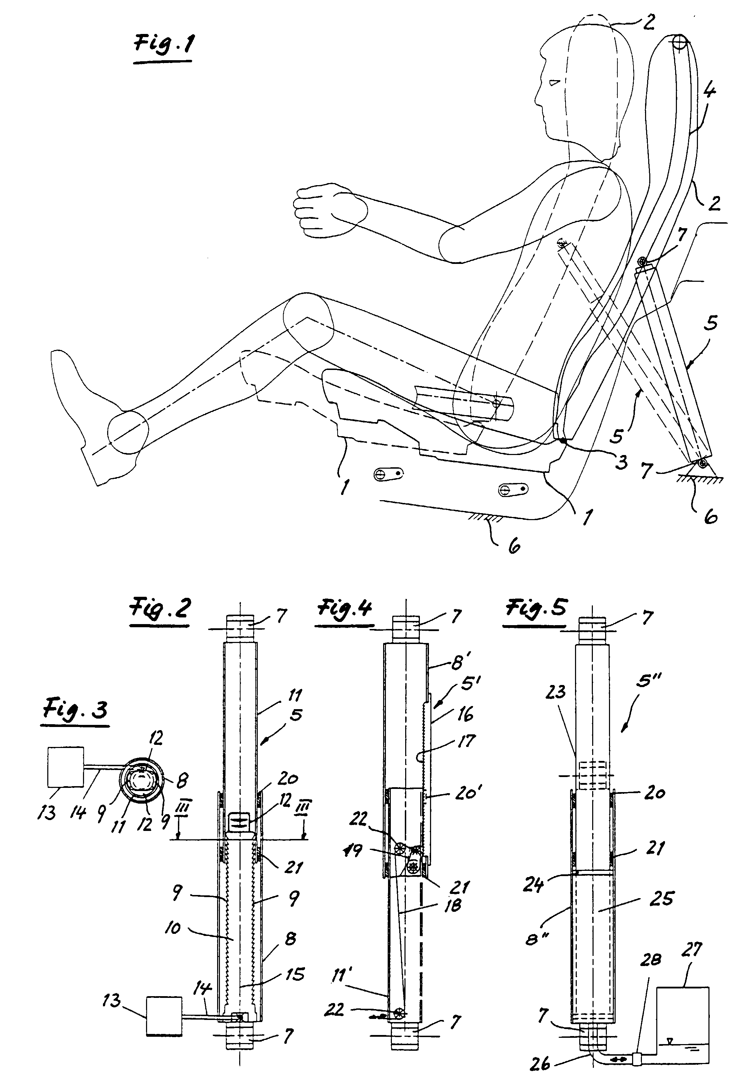

In Fig. 1 der Zeichnung ist der in einem Kraftfahrzeug angeordnete Sitz in ausgezogenen Linien mit seinem längs- und auch in der Höhe verstellbaren Sitzteil 1 und der Rückenlehne 2 dargestellt, die gegenüber dem Sitzteil 1 auch in der Neigung verstellbar ist. In strichpunktierten Linien ist das Sitzteil 1 in einer nach vorne verlagerten Position wiedergegeben; dementsprechend nimmt auch die Rückenlehne 2 - gleichfalls strichliert dargestellt - eine weiter vorne befindliche Position ein. Die Rückenlehne 2 ist am Sitzteil 1 um eine Querachse 3 schwenkbar.

Die Rückenlehne 2 weist einen verstärkten Lehnenrahmen 4 auf, der nach oben so weit verlängert ist, daß er auch als Stützrahmen für den Fall eines Fahrzeugüberschlags dienen kann. Wie man in Fig. 1 erkennt, ist der Lehnenrahmen 4 über ein längenveränderliches und in verschiedenen Längen arretierbares Stützelement 5 gegenüber dem lediglich angedeuteten Fahrzeugaufbau 6 abgestützt. Bei dem dargestellten Ausführungsbeispiel ist ein telekopierbares Stützelement vorgesehen. Es ist sowohl mit dem Lehnenrahmen 4 als auch mit dem Fahrzeugaufbau 6 gelenkig verbunden und hierzu an den freien Endbereichen der beiden teleskopierbaren Teile jeweils mit Gelenkaugen 7 ausgerüstet.

Bei dem in der Zeichnung wiedergegebenen bevorzugten Ausführungsbeispiel erstreckt sich das Stützelement 5 etwa vom mittleren Höhenbereich des Lehnenrahmens 4 nach hinten unten. Es können jedem Sitz zwei Stützelemente 5 zugeordnet sein.

Bei dem Ausführungsbeispiel nach den Fig. 2 und 3 ist in einem äußeren Rohr 8 des teleskopierbaren Stützelementes 5 ein drehbarer mit zwei Verzahnungen 9 versehener Dorn 10 angeordnet, die mit einer im Inneren des Innenrohres 11 jeweils über einen Teilbereich des Innenumfangs vorgesehenen Gegenverzahnung 12 in Eingriff bringbar sind. Der Dorn 10 trägt die zwei Verzahnungen 9 radial gegenüberliegend an seiner Außenseite. Dementsprechend liegen auch die Gegenverzahnungen 12 des Innenrohres 12 diametral gegenüber.

Zum Verdrehen des Dornes 10 ist eine - ggf. sensorgesteuert arbeitende - Stelleinheit 13 vorgesehen, die über eine Koppelstange 14 im Abstand von der Mittelachse 15 des Stützelementes 5 an dem verdrehbaren Dorn 10 angreift. Die Steuerung der Stelleinheit kann auch so erfolgen, daß die Stützstrebe 5 im Normalfall verriegelt ist und nur dann entriegelt wird, wenn der Sitz bzw. die Rückenlehne 2 verstellt werden.

Bei dem Ausführungsbeispiel nach Fig. 4 befindet sich das äußere Rohr 8' der beiden teleskopierbaren Rohre der Stützstrebe 5' oben und ist mit einer Zahnleiste 16 versehen, deren Verzahnung 17 von der Innenwand des äußeren Rohres 8' nach innen weist. Das untere, innere Rohr 11' ist mit einer über einen Seilzug 18 betätigbaren, federbelasteten Sperrklinke 19 versehen, die über eine Öffnung des Innenrohres 11' mit der Verzahnung 17 der Zahnleiste 16 in Eingriff treten kann. Die obere Führung 20' der beiden zwischen den teleskopierbaren Rohren 8' und 11' vorgesehenen Führungen 20' bzw. 21 ist im Bereich der Zahnleiste 16 ausgespart. Der Seilzug 18 wird über zwei Umlenkrollen 22 aus dem unteren Bereich des inneren Rohres 11' zu der in dessen oberen Bereich gelagerten Sperrklinke 19 geführt.

Das Ausführungsbeispiel nach Fig. 5 zeigt ein teleskopierbares Element 5", das hydraulisch arretierbar ist. Hierzu ist das äußere Rohr 8" als Hydraulikzylinder ausgebildet, in dem ein mit einer Kolbenstange 23 versehener Kolben 24 verschiebbar ist. Die Kolbenstange 23 ist in dem Rohr 8" über geeignete Führungen 20 und 21 geführt. Der Kolben 24 begrenzt mit dem unteren Bereich des äußeren Rohres 8" einen mit Hydraulikflüssigkeit gefüllten Arbeitsraum 25, der über eine Leitung 26 mit einem Ausgleichsbehälter 27 hydraulisch verbunden ist. In der Leitung 26 ist ein im Falle eines Crashs oder auch eines Überschlags sperrbares Absperrventil 28 vorgesehen. Ist dieses Absperrventil 28 geschlossen, ist die Stützstrebe 5" blockiert bzw. arretiert. Ist es offen, kann die Hydraulikflüssigkeit durch den Kolben 24 zwischen dem Arbeitsraum 25 und dem Ausgleichsbehälter 27 hin- und hergeschoben werden.

## Patentansprüche

1. In einem Kraftfahrzeug angeordneter Sitz mit einem längs verstellbaren Sitzteil (1) und einer daran angeordneten, in der Neigung verstellbaren Rückenlehne (2), deren Lehnenrahmen (4) nach oben verlängert ist, und auch als Stützrahmen für den Fall eines Fahrzeugüberschlags wirkt,
dadurch gekennzeichnet, daß der Lehnenrahmen (4) über ein längenveränderliches, in verschiedenen Längen arretierbares und sich von dem Lehnenrahmen (4) nach hinten unten erstreckendes teleskopierbares Stützelement (5, 5', 5") gegenüber dem Fahrzeugaufbau (6) abgestützt ist, das im Falle eines Überschlags arretiert ist.

2. Sitz nach Anspruch 1,
dadurch gekennzeichnet, daß jedem Sitz zwei Stützelemente (5, 5', 5") zugeordnet sind.

3. Sitz nach Anspruch 1,
dadurch gekennzeichnet, daß im äußeren Rohr (8) des teleskopierbaren Stützelementes (5) ein drehbarer, mit einer Verzahnung (9) versehener Dorn (10) angeordnet ist, der mit einer im Inneren des Innenrohres (11) über einen Teilbereich des Innenumfangs vorgesehenen Gegenverzahnung (12) in Eingriff bringbar ist.

4. Sitz nach Anspruch 3,
dadurch gekennzeichnet, daß der Dorn (10) außen zwei radial gegenüberliegende Verzahnungen (9) hat, die mit zwei Gegenverzahnungen (12) des Innenrohres (11) zusammenwirken.

5. Sitz nach Anspruch 1,
dadurch gekennzeichnet, daß eines der beiden teleskopierbaren Rohre (8', 11') eine federbelastete und über einen Seilzug (18) betätigbare Sperrklinke (19) aufweist, die mit einer am anderen Rohr (8) vorgesehenen Zahnleiste (16) zusammenwirkt.

6. Sitz nach Anspruch 5,
dadurch gekennzeichnet, daß die Verzahnung (17) der Zahnleiste (16) von der Innenwand des äußeren Rohres (8') nach innen weist und die Sperrklinke (19) über eine Öffnung des Innenrohres (11') mit der Verzahnung (17) in Eingriff treten kann.

7. Sitz nach Anspruch 1,
dadurch gekennzeichnet, daß das teleskopierbare Element (5") hydraulisch arretierbar ist.

8. Sitz nach Anspruch 7,
dadurch gekennzeichnet, daß in dem äußeren Rohr (8") ein mit einer Kolbenstange (23) versehener Kolben (24) verschiebbar ist, der mit dem äußeren Rohr (8") einen mit Hydraulikflüssigkeit gefüllten Arbeitsraum (25) begrenzt, der über eine Leitung und ein im Falle eines Überschlags sperrbares Absperrventil (28) mit einem Ausgleichsbehälter (27) für die Hydraulikflüssigkeit verbunden ist.

## Claims

1. A seat disposed in a motor vehicle and having a longitudinally adjustable seat part (1) and an adjustable-inclination back rest (2) disposed on the seat and having a frame (4) prolonged upwards and also acting as a support frame if the vehicle overturns,
characterised in that the back-rest frame (4) is braced against the vehicle body (6) by a variable-length telescopic support element (5, 5', 5") which is lockable at various lengths, extends backwards and downwards from the back-rest frame (4), and is lockable in the event of an overturn.

2. A seat according to claim 1,
characterised in that two support elements (5, 5', 5") are associated with each seat.

3. A seat according to claim 1,
characterised in that a rotatable mandrel (10) having teeth (9) is disposed in the outer tube (8) of the telescopic support element (5) and can be brought into engagement with mating teeth provided in the inner tube (11) over a part of the inner periphery.

4. A seat according to claim 3,
characterised in that the mandrel (10) has two external radially opposite sets of teeth (9) which co-operate with two mating sets of teeth (12) on the inner tube (11).

5. A seat according to claim 1,
characterised in that one of the two telescopic tubes (8', 11') has a spring-loaded catch (19) actuated by a cable line (18) and co-operating with a toothed strip (16) provided on the other tube (8).

6. A seat according to claim 5,
characterised in that the teeth (17) on the toothed strip (16) point inwards from the inner wall of the outer tube (8') and the catch (19) can engage the teeth (17) via an opening in the inner tube (11').

7. A seat according to claim 1,
characterised in that the telescopic element (5") is hydraulically lockable.

8. A seat according to claim 7,
characterised in that a piston (24) provided with a piston rod (23) is movable in the outer tube (8") and co-operates with the outer tube (8") to bound a working chamber (25) filled with hydraulic fluid and connected to a hydraulic fluid reservoir (27) via a line and a shut-off valve (28) which can be blocked in the event of an overturn.

## Revendications

1. Siège, monté dans un véhicule automobile, et comprenant une assise (1) réglable en direction longitudinale et portant un dossier (2), réglable en inclinaison et dont le cadre (4) est prolongé vers le haut et sert de cadre de protection en cas de capotage du véhicule,
caractérisé en ce que
le cadre de dossier (4) s'appuie sur la structure du véhicule (6) par l'intermédiaire d'un élément de soutien (5, 5', 5") de longueur variable, pouvant être bloqué à différentes longueurs, ayant la forme d'un télescope dirige vers l'arrière et vers le bas, cet élément étant bloqué dans le cas d'un capotage.

2. Siège selon la revendication 1,
caractérisée en ce que
deux éléments de soutien (5, 5', 5") sont associés à chaque siège.

3. Siège selon la revendication 1,
caractérisé en ce que
dans le tube externe (8) de l'élément de soutien (5) télescopique est logée une broche (10) portant une denture (9) qui peut être amenée en prise avec une contredenture (12) prévue sur une partie de la périphérie interne du tube interne (11).

4. Siège selon la revendication 3,
caractérisé en ce que
la broche (10) porte deux dentures (9) externes radialement opposées coopérant avec deux contredentures (12) du tube interne (11).

5. Siège selon la revendication 1,
caractérisé en ce qu'
un des deux tubes télescopiques (8', 11') porte un cliquet d'arrêt (19) chargé élastiquement et actionnable par l'intermédiaire d'un câble de traction (18), ce cliquet coopérant avec une réglette dentée prévue sur l'autre tube (8).

6. Siège selon la revendication 5,
caractérisé en ce que
la denture (17) de la réglette dentée (16) part de la paroi interne du tube externe (8') vers l'intérieur et le cliquet d'arrêt (19) peut venir en prise avec la denture (17) à travers une ouverture du tube interne (11').

7. Siège selon la revendication 1,
caractérisé en ce que
l'élément télescopique(5") peut être bloqué hydrauliquement.

8. Siège selon la revendication 7,
caractérisé en ce que
dans le tube externe (8") peut coulisser un piston (24) équipé d'une tige de piston (23) et délimitant avec le tube externe (8") une chambre de travail (25) remplie d'un liquide hydraulique et que relient une conduite et une soupape d'arrêt (28) blocable dans le cas d'un capotage, à un récipient d'équilibrage (27) contenant du liquide hydraulique.
